# FASCICULE DE BREVET EUROPEEN

(11) **EP 1 348 620 B1**
(45) Date de publication et mention de la délivrance du brevet: **22.11.2006**
(21) Numéro de dépôt: 03290548.1
(22) Date de dépôt: 07.03.2003
(51) Int. Cl.: B63J 5/00, F17C 9/04

(54) **Installation pour la fourniture de combustible gazeux a un ensemble de production énérgetique d'un navire de transport de gaz liquéfié**
Vorrichtung zur Förderung von Gasbrennstoff zur Kraftanlage eines LNG-Schiffes
Arrangement for supplying gaseous fuel to a power plant in a LNG ship

(30) Priorité: 26.03.2002 FR 0203757
(43) Date de publication de la demande: 01.10.2003
(73) Titulaire: AKER YARDS S.A., 44600 Saint Nazaire (FR)
(72) Inventeur: Courtay, Roger, 44410 Saint Lyphard (FR)
(74) Mandataire: Le Faou, Daniel

(56) Documents cités:
- FR-A- 2 160 055

## Description

La présente invention concerne une installation pour la fourniture de combustible gazeux à un ensemble de production énergétique d'un navire de transport de gaz liquéfié à partir du contenu d'au moins une cuve du navire.

Dans les navires méthaniers connus, l'ensemble de production énergétique comprend une chaudière de production de vapeur alimentant une turbine entraînant l'hélice. La chaudière de production de vapeur utilise comme combustible le gaz de la cargaison. Dans les cuves qui sont isolées thermiquement, le méthane est à l'état liquide et la phase gazeuse située au-dessus du niveau liquide est à une pression voisine de 1 bar.

L'alimentation de la chaudière provient d'une part, de la phase gazeuse au-dessus du liquide, aspirée directement au-dessus de la surface par un compresseur axial alimentant, sous la pression requise, les brûleurs de la chaudière et d'autre part, par aspiration de liquide pompé dans les cuves et envoyé vers un évaporateur ; en sortie, le gaz est détendu à la pression d'entrée, d'environ 1 bar, du compresseur et envoyé vers ce compresseur avec le gaz provenant directement de la phase gazeuse des cuves par évaporation naturelle.

La partie provenant du liquide pompé et mise en phase gazeuse est produite lorsque la seule évaporation naturelle est insuffisante pour alimenter les besoins énergétiques du navire.

Une telle installation peut également être utilisée pour alimenter en combustible gazeux un ensemble de production énergétique autre qu'une chaudière alimentant une turbine. Le brevet FR 2 722 760 décrit ainsi une telle installation alimentant en combustible gazeux des moteurs thermiques entraînant des alternateurs alimentant des moteurs électriques accouplés à l'hélice.

Le brevet FR 2160055 décrit une installation de turbines à gaz pour la propulsion de navires, dans laquelle un évaporateur avec vaporisation forcée sert à fournir la quantité de gaz nécessaire à l'état momentané de fonctionnement de l'installation.

La présente invention propose une disposition nouvelle qui permet notamment de réduire la puissance du compresseur et elle a ainsi pour objet une installation pour la fourniture de combustible gazeux à un ensemble de production énergétique d'un navire de transport de gaz liquéfié, à partir du contenu d'au moins une cuve dudit navire, ladite cuve contenant dudit gaz liquéfié et du gaz en phase vapeur au-dessus d'une surface de séparation liquide-vapeur, et comprenant un compresseur entraîné par un moteur et dont l'entrée aspire dans ladite cuve au-dessus de 1a surface liquide, la sortie du compresseur débitant dans un collecteur d'alimentation dudit ensemble de production énergétique, et une pompe immergée au fond de la cuve reliée par une conduite à l'entrée d'un évaporateur, caractérisée en ce que la sortie de l'évaporateur est reliée audit collecteur, une conduite de retour du liquide dans la cuve, équipée d'une première vanne régulée, étant reliée à la conduite reliant la pompe à l'évaporateur.

Selon une autre caractéristique, une deuxième vanne est située sur la conduite reliant la pompe à l'évaporateur, en aval de la liaison de ladite conduite de retour à la conduite reliant la pompe à l'évaporateur.

Selon une autre caractéristique, une troisième vanne régulée équipe une conduite reliée audit collecteur, ladite conduite aboutissant à un dispositif d'oxydation du gaz.

Selon une autre caractéristique, un premier automate commande, en fonction de la pression dans la cuve, le démarrage et l'arrêt de la pompe en même temps que l'ouverture et la fermeture de la vanne située sur la conduite reliant la pompe à l'évaporateur, ainsi que l'ouverture de la vanne régulée alimentant le dispositif d'oxydation du gaz.

Selon une autre caractéristique, un second automate commande, en fonction de la pression mesurée dans la conduite reliant 1a pompe à l'évaporateur, l'ouverture de la vanne régulée située sur la conduite de retour.

Selon une autre caractéristique, un troisième automate commande, en fonction de la pression mesurée dans le collecteur d'alimentation de l'ensemble de production énergétique, la vitesse de rotation du moteur d'entraînement dudit compresseur ainsi que l'angle des aubes d'entrée du compresseur.

On va maintenant donner la description d'un exemple de mise en oeuvre de l'invention en se référant au dessin annexé dans lequel :
La fig. 1 représente une installation selon l'invention.
La fig. 2 est un graphique illustrant, en fonction de la pression dans la cuve, l'état marche/arrêt de la pompe ainsi que l'état d'ouverture de deux vannes.
La fig. 3 est un graphique d'illustration de la régulation.

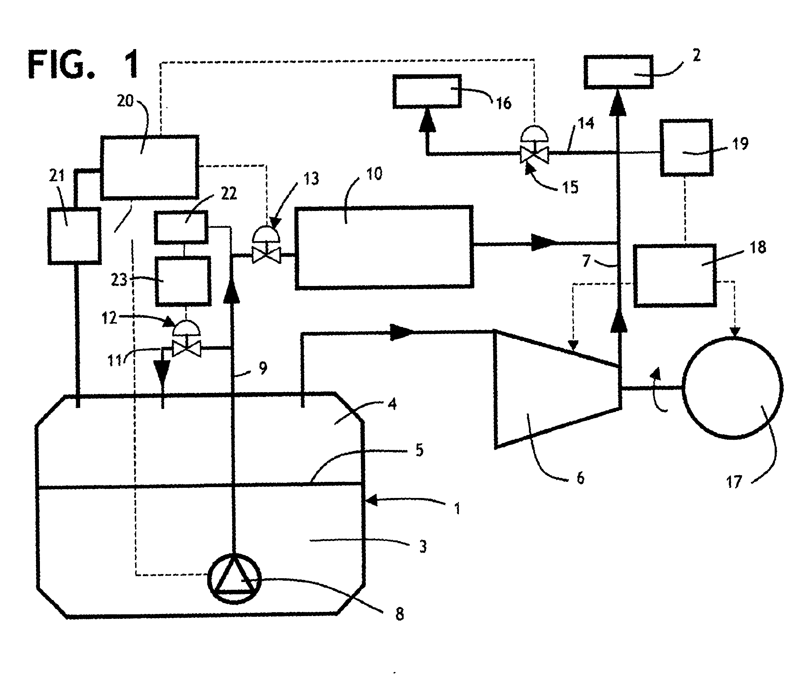

En se référant à la fig. 1, il s'agit d'alimenter en combustible gazeux un ensemble de production énergétique d'un navire de transport de gaz liquéfié tel qu'un méthanier dont une cuve 1 est figurée.

Un tel ensemble de production énergétique est référencé 2 et peut comporter des moteurs diesels entraînant des alternateurs pour la production d'énergie électrique pour les installations électriques du navire et sa propulsion, mais pourrait alternativement alimenter un ensemble classique comportant une chaudière de production de vapeur alimentant une turbine à vapeur pour l'entraînement de l'hélice.

La cuve 1 contient du gaz liquéfié 3 à -163°C et en phase vapeur en 4 au-dessus de la surface 5 du liquide. La pression de la cuve est voisine de la pression atmosphérique. L'installation comprend un compresseur 6 dont l'entrée aspire en 4 dans la phase vapeur et dont la sortie débite dans un collecteur 7 d'alimentation de l'ensemble 2. Par ailleurs, une pompe 8, immergée en fond de cuve est reliée par une conduite 9 à l'entrée d'un évaporateur 10 dont la sortie est reliée au collecteur 7.

Une conduite de retour 11 vers la cuve 1, équipée d'une première vanne régulée 12 est reliée à la conduite 9 tandis qu'une deuxième vanne 13 est située sur la conduite 9 en aval de la liaison de la conduite de retour 11 à la conduite 9.

Une conduite 14, équipée d'une troisième vanne 15, régulée est en outre reliée au collecteur 7 en aval de la liaison de la sortie de l'évaporateur 10 au collecteur 7, et aboutit à un dispositif d'oxydation 16 du gaz, appelé parfois incinérateur ou « oxydiser » en anglais.

Enfin, le compresseur 6 est entraîné par un moteur 17 dont la vitesse de rotation est commandée à partir d'un automate 18 recevant une information d'une jauge de pression 19 mesurant la pression du gaz dans le collecteur 7. L'automate 18 commande également, en fonction de la pression mesurée par la jauge 19, l'angle des aubes d'entrée du compresseur 6.

La vanne 13 située à l'entrée de l'évaporateur 10 est commandée à l'ouverture et à la fermeture, en tout ou rien, par un deuxième automate 20. Cet automate reçoit en entrée une information de la pression dans la cuve 1 donnée par une jauge de pression 21 et commande, outre la vanne 13, la vanne 15 à ouverture régulée variable ainsi que le démarrage et l'arrêt de la pompe 8. Enfin, une jauge de pression 22 mesure la pression dans la conduite 9 et l'information est envoyée vers un troisième automate 23 qui commande la vanne 12 régulée à ouverture variable.

La disposition de l'installation décrite, contrairement à celle de l'art antérieur, relie la sortie de l'évaporateur non plus à l'entrée du compresseur mais à sa sortie, dans le collecteur 7 d'alimentation de l'ensemble 2. Ainsi, le liquide pompé ayant déjà été mis en pression par la pompe 8, on évite ainsi de le détendre à une pression voisine de la pression atmosphérique comme cela est nécessaire dans l'art antérieur où la sortie de l'évaporateur est envoyé à l'entrée du compresseur en même temps que le gaz évaporé naturellement dans la cuve.

On ne comprime donc plus que le gaz en provenance de la phase gazeuse 4 de la cuve 2, ce qui se traduit par une réduction de la consommation d'énergie nécessaire à la production totale du gaz envoyé vers l'ensemble 2.

Le fonctionnement est le suivant :

Le compresseur 6 est en fonctionnement continu et aspire donc en permanence le gaz qui s'évapore dans l'espace 4.

Selon les conditions d'échange thermique entre l'extérieur et l'intérieur de la cuve, et la quantité du niveau liquide dans la cuve, la pression à l'intérieur de la cuve varie quelque peu et la régulation est faite de la façon suivante :

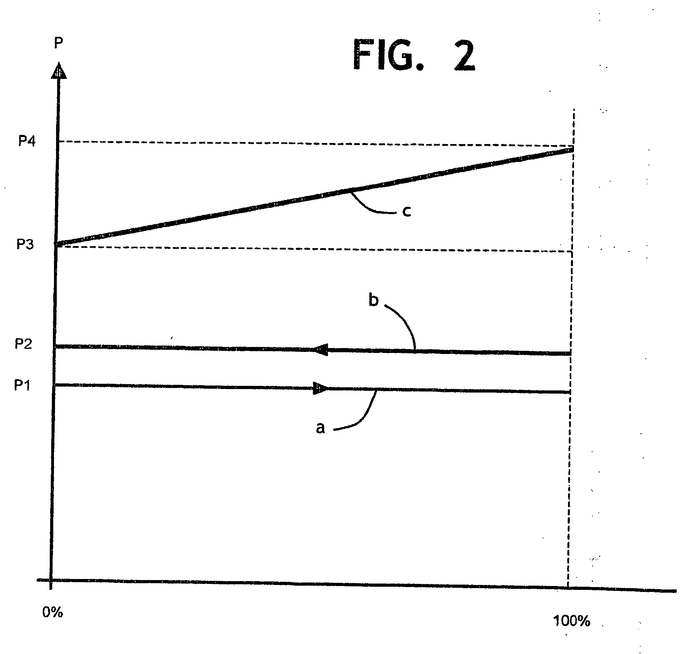

La fig. 2 montre, en fonction de la pression dans la cuve 1, la position marche/arrêt de la pompe 8, ainsi que la position ouverte ou fermée de la vanne 13 et la valeur d'ouverture de 0 à 100 % de la vanne 15. La position de la vanne 15 est représentée sur cette figure par la courbe c entre les pressions P₃ et P₄, tandis que la courbe b montre la fermeture de la vanne 13 et l'arrêt de la pompe 8 au passage de la pression P₂ dans le sens d'une augmentation de la pression et que la courbe a montre l'ouverture de la vanne 13 et la mise en marche de la pompe 8 au passage de la pression P₁ dans le sens d'une diminution de la pression dans la cuve 1.

Au dessous de P₁, l'évaporation naturelle dans la cuve est insuffisante pour assurer le besoin énergétique du navire et la pompe 8 est ainsi mise en marche et la vanne 13 est ouverte. C'est ce qui se produit lorsque la cuve 1 est très peu remplie.

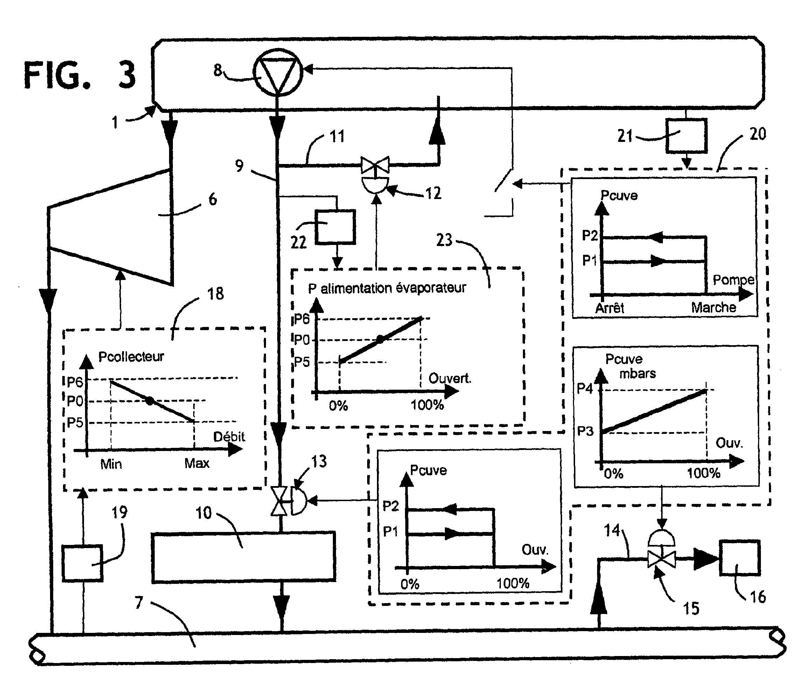

Lorsque la cuve 1 est remplie, et selon les conditions d'échange thermique avec l'extérieur, ou bien la production de gaz venant de l'évaporation naturelle en 4 est suffisante mais non excessive, alors seul le compresseur 6 est en fonctionnement, la pompe 8 est arrêtée et la vanne 13 est fermée, c'est ce qui se passe dès que la pression atteint et dépasse P₂, ou bien la pression atteint une valeur P₃ et la production d'évaporation naturelle est trop importante et il est nécessaire d'évacuer l'excès de gaz non consommé par l'ensemble 2, alors la vanne 15 s'ouvre progressivement jusqu'à 100 % de son ouverture si la pression atteint une valeur P₄. Tout ceci est commandé par l'automate 20 en fonction de la pression dans la cuve mesurée par la jauge 21. La fig. 3 figure cette régulation.

Parallèlement à cela et comme le montre cette même fig. 3, la pression d'alimentation de l'évaporateur est asservie à une pression de consigne P₀ et elle est réglée par le moyen de la vanne 12 sur la conduite de retour 11, dont l'ouverture de 0 à 100 % est commandée par l'automate 23 en fonction de la pression dans la conduite 9 mesurée par la jauge 22: pour une valeur égale ou inférieure à P₅, la vanne 12 est fermée et elle s'ouvre progressivement entre P₅ et P₆ où elle s'ouvre complètement. La pression de sortie de l'évaporateur correspondant à la pression du collecteur 7 est sensiblement la même que la pression d'alimentation de l'évaporateur.

Par ailleurs, le compresseur a comme consigne de régulation une valeur identique à celle de l'évaporateur (P₀) à la chute de pression près dans cet évaporateur. La pression de gaz dans le collecteur 7 est mesurée par la jauge 19 et constitue le retour de pression comparé à la consigne de pression fournie par l'automate au compresseur. Le compresseur aspire le gaz directement dans la cuve et ceci d'autant plus que l'ensemble 2 consomme une grande quantité de gaz et donc que la pression chute dans le collecteur 7. Cette régulation de compresseur ne prend pas en compte la pression de gaz dans la cuve. La jauge 19 mesure la pression dans le collecteur, l'adresse à l'automate 18 qui agit sur la vitesse de rotation du moteur d'entraînement 17 du compresseur 6 et sur l'angle de ses aubes d'entrée. Cette régulation est rapide et compense immédiatement toute chute brutale de pression dans le collecteur et dispose d'un tampon de gaz très important puisque le compresseur aspire dans une cuve de très grand volume.

L'évaporateur 10 a comme consigne de régulation de pression P₀. La pression cuve est mesurée par la jauge 21. Si cette pression chute au-dessous de P₁, la pompe 8 est démarrée pour fournir en gaz le collecteur 7 via l'évaporateur, ceci a pour conséquence de réduire la quantité de gaz aspiré par le compresseur 6 dans la cuve et donc de limiter la chute de pression dans la cuve.

La vanne 15, alimentant un dispositif d'oxydation 16 du gaz appelé incinérateur ou «oxydiser» en anglais agit comme une protection de la cuve contre une éventuelle surpression : elle commence à s'ouvrir à partir de la pression P₃.

Dans l'exemple décrit, les valeurs respectives de P₁, P₂, P₃ et P₄ sont de 1060, 1070, 1180 et 1220 millibars, et les pressions P₅ et P₆ dans le collecteur 7, et en entrée de l'évaporateur 10 lorsque la pompe 8 est en marche, sont respectivement de 5 et 6 bars, la pression P₀ de consigne étant de 5,5 bars.

Bien entendu, les automates 18, 20 et 23 peuvent être regroupés dans un système de contrôle-commande centralisé sur lequel sont acheminées toutes les données nécessaires : pression dans la cuve 1, pression dans la conduite 9 et pression dans le collecteur 7, et à partir duquel les ordres de commandes sont envoyés vers les actionneurs.

## Revendications

1. Installation pour la fourniture de combustible gazeux à un ensemble (2) de production énergétique d'un navire de transport de gaz liquéfié, à partir du contenu d'au moins une cuve (1) dudit navire, ladite cuve contenant dudit gaz liquéfié (3) et du gaz (4) en phase vapeur au-dessus d'une surface (5) de séparation liquide-vapeur, et comprenant un compresseur (6) entraîné par un moteur (17) et dont l'entrée est apte à aspirer dans ladite cuve (1) au-dessus de la surface liquide, la sortie du compresseur débitant dans un collecteur (7) d'alimentation dudit ensemble (2) de production énergétique et une pompe (8) immergeable au fond de la cuve reliée par une conduite (9) à l'entrée d'un évaporateur (10), **caractérisée en ce que** la sortie de l'évaporateur (10) est reliée audit collecteur (7), une conduite de retour (11) du liquide dans la cuve, équipée d'une première vanne (12) régulée, étant reliée à la conduite (9) reliant la pompe (8) à l'évaporateur (10).

2. Installation selon la revendication 1, **caractérisée en ce qu**'une deuxième vanne (13) est située sur la conduite reliant la pompe à l'évaporateur, en aval de la liaison de ladite conduite de retour (11) à la conduite (9) reliant la pompe (8) à l'évaporateur.

3. Installation selon l'une des revendications 1 ou 2, **caractérisée en ce qu**'une troisième vanne (15), régulée, équipe une conduite (14) reliée audit collecteur (7), ladite conduite aboutissant à un dispositif d'oxydation (16) du gaz.

4. Installation selon la revendication 3, **caractérisée en ce qu**'un premier automate (20) commande, en fonction de la pression dans la cuve, le démarrage et l'arrêt de la pompe (8) en même temps que l'ouverture et la fermeture de la vanne (13) située sur la conduite (9) reliant 1a pompe (8) à l'évaporateur (10), ainsi que l'ouverture de la vanne (15) régulée alimentant le dispositif d'oxydation (16) du gaz.

5. Installation selon l'une des revendications 1 à 4, **caractérisée en ce qu**'un second automate (23) commande, en fonction de la pression mesurée dans la conduite (9) reliant la pompe (8) à l'évaporateur (10), l'ouverture de la vanne régulée (12) située sur la conduite de retour (11).

6. Installation selon l'une des revendications 3, 4 ou 5, **caractérisée en ce qu**'un troisième automate (18) commande, en fonction de la pression mesurée dans le collecteur (7) d'alimentation de l'ensemble (2) de production énergétique, la vitesse de rotation du moteur (17) d'entraînement dudit compresseur (6) ainsi que l'angle des aubes d'entrée du compresseur.

7. Installation selon la revendication 3, **caractérisée en ce qu**'un système de contrôle-commande centralisé commande, en fonction de la pression dans la cuve, le démarrage et l'arrêt de la pompe (8) en même temps que l'ouverture et la fermeture de la vanne (13) située sur la conduite 9 reliant la pompe (8) à l'évaporateur (10), ainsi que l'ouverture de la vanne (15) régulée alimentant le dispositif (16) d'oxydation du gaz, ledit système commandant en outre l'ouverture de la vanne régulée (12) située sur la conduite de retour (11), en fonction de la pression mesurée dans la conduite (9) reliant la pompe (8) à l'évaporateur (10), et la vitesse de rotation du moteur (17) d'entraînement du compresseur (6) ainsi que l'angle de ses aubes d'entrée en fonction de la pression mesurée dans le collecteur (7) d'alimentation de l'ensemble (2) de production énergétique.

## Claims

1. An installation for supplying gaseous fuel to a power generation system (2) of a ship fox transporting liquefied gas from a tank (1) of said ship containing said liquefied gas (3) and gas in the vapor phase (4) above a liquid-vapor separation surface (5) , said installation including a compressor (6) driven by a motor (17) and whose inlet is suitable for aspirating in «aid tank (1) above the liquid surface and whose outlet discharges into a feed manifold (7) of said power generation system (2), and a submersible pump (8) at the bottom of the tank connected by a pipe (9) to the inlet of an evaporator (10), **characterized in that** the outlet of the evaporator (10) is connected to said manifold (7) and a return pipe (11) for returning liquid to the tank and equipped with a first regulated valve (12) is connected to the pipe (9) connecting the pump (8) to the evaporator (10).

2. An installation according to claim 1 **characterized in that** the pipe connecting the pump to the evaporator includes a second valve (13) downstream of the connection of said return pipe (11) to the pipe (9) connecting the pump (8) to the evaporator.

3. An installation according to either claim 1 or claim 2, **characterized in that** a third regulated valve (15) is fitted to a pipe (14) which is connected to said manifold (7) and leads to a gas oxidizer {16).

4. An installation according to claim 3, **characterized in that** a first automatic controller (20) controls as a function of the pressure in the tank: at the same time starting and stopping of the pump (8), opening and closing of the valve (13) situated on the pipe (9) connecting the pump (8) to the evaporator (10), as well as opening of the regulated valve (15) feeding the gas oxidizer (16).

5. An installation according to any of claims 1 to 4, **characterized in that** a second automatic controller (23) controls opening and closing of the regulated valve {12} situated on the return pipe (11) as a function of the pressure measured in the pipe (9) connecting the pump (8) to the evaporator (10).

6. An installation according to any of claims 3 to 5, **characterized in that** a third automatic controller (18) controls the rotation speed of the motor (17) driving said compressor (6) and the angle of the inlet blades of the compressor as a function of the pressure measured in the feed manifold (7) of the power generation system (2)

7. An installation according to claim 3, **characterized in that** a centralized control and command system controls as a function of the pressure in the tank: at the same time starting and stopping of the pump (8), opening and closing of the valve (13) situated on the pipe (9) connecting the pump (8) to the evaporator (10) , as well as opening and closing of the regulated valve (15) supplying the gas oxidizer {16), wherein said system further controls opening of the regulated valve (12) situated on the return pipe (11) as a function of the pressure measured in the pipe (9) connecting the pump (8) to the evaporator (10), and the rotation speed of the motor (17) for driving the compressor (6) as well as the angle of its inlet blades as a function of the pressure measured in the feed manifold (7) of the power generation system (2).

## Patentansprüche

1. Einrichtung zur Zuführung eines gasförmigen Brennstoffs an eine Einheit (2) zur Energieerzeugung in einem Transportschiff für Flüssiggas ausgehend vom Inhalt wenigstens eines Tanks (1) des Schiffes, wobei der Tank von dem Flüssiggas (3) und über einer Flüssigkeit-Dampf-Trennfläche (5) Gas (4) in der Dampfphase enthält, und wobei sie folgendes umfaßt: einen Kompressor (6), der von einem Motor (17) angetrieben wird und dessen Eingang dafür eingerichtet ist, im Tank (1) oberhalb der Flüssigkeitsoberfläche anzusaugen, wobei der Ausgang des Kompressors in einen Sammler (7) zur Versorgung der Energieerzeugungseinheit (2) pumpt, und eine Pumpe (8), die auf den Boden des Tanks eintauchbar ist und die über eine Leitung (9) mit dem Eingang eines Verdampfers (10) verbunden ist, **dadurch gekennzeichnet, daß** der Ausgang des Verdampfers (10) mit dem Sammler (7) verbunden ist, wobei eine Rückführungsleitung (11) für Flüssigkeit in den Tank, die mit einem ersten geregelten Ventil (12) ausgestattet ist, mit der Leitung (9) verbunden ist, die die Pumpe (8) mit dem Verdampfer (10) verbindet.

2. Einrichtung nach Anspruch 1, **dadurch gekennzeichnet, daß** in der Leitung, die die Pumpe mit dem Verdampfer verbindet, ein zweites Ventil (13) angeordnet ist, wobei dieses nach der Anbindung der Rückführungsleitung (11) an die Leitung (9), die die Pumpe (8) mit dem Verdampfer verbindet, liegt.

3. Einrichtung nach einem der Ansprüche 1 oder 2, **dadurch gekennzeichnet, daß** ein drittes Ventil (15), das geregelt ist, eine Leitung (14) ausstattet, die mit dem Sammler (7) verbunden ist, wobei die Leitung zu einer Oxidationsvorrichtung (16) für das Gas führt.

4. Einrichtung nach Anspruch 3, **dadurch gekennzeichnet, daß** ein erster Automat (20) in Abhängigkeit vom Druck im Tank das Anlaufen und Anhalten der Pumpe (8) gleichzeitig mit dem Öffnen und Schließen des Ventils (13), das sich in der Leitung (9) befindet, die die Pumpe (8) mit dem Verdampfer (10) verbindet, sowie das Öffnen des geregelten Ventils (15), das die Oxidationsvorrichtung (16) des Gases versorgt, steuert.

5. Einrichtung nach einem der Ansprüche 1 bis 4, **dadurch gekennzeichnet, daß** ein zweiter Automat (23) in Abhängigkeit vom Druck, der in der Leitung (9) gemessen wird, die die Pumpe (8) mit dem Verdampfer (10) verbindet, das Öffnen des geregelten Ventils (12) steuert, das sich in der Rückführungsleitung (11) befindet.

6. Einrichtung nach einem der Ansprüche 3, 4 oder 5, **dadurch gekennzeichnet, daß** ein dritter Automat (18) in Abhängigkeit vom Druck, der im Sammler (7) zur Versorgung der Energieerzeugungseinheit (2) gemessen wird, die Drehzahl des Motors (17) zum Antrieb des Kompressors (6) sowie den Winkel der Eingangsschaufeln des Kompressors steuert.

7. Einrichtung nach Anspruch 3, **dadurch gekennzeichnet, daß** ein zentralisiertes Überwachungs-Steuerungssystem in Abhängigkeit vom Druck im Tank das Anlaufen und Anhalten der Pumpe (8) gleichzeitig mit dem Öffnen und Schließen des Ventils (13), das sich in der Leitung (9) befindet, die die Pumpe (8) mit dem Verdampfer (10) verbindet, sowie das Öffnen des geregelten Ventils (15), das die Oxidationsvorrichtung (16) des Gases versorgt, steuert, wobei das System außerdem folgendes steuert: das Öffnen des geregelten Ventils (12), das sich in der Rückführungsleitung (11) befindet, in Abhängigkeit vom Druck, der in der Leitung (9) gemessen wird, die die Pumpe (8) mit dem Verdampfer (10) verbindet, und die Drehzahl des Motors (17) zum Antrieb des Kompressors (6) sowie den Winkel der Eingangsschaufeln, in Abhängigkeit vom Druck, der im Sammler (7) zur Versorgung der Energieerzeugungseinheit (2) gemessen wird.
